# EUROPEAN PATENT APPLICATION

(11) **EP 3 711 924 A1**
(43) Date of publication of application: **23.09.2020**
(21) Application number: 20162099.4
(22) Date of filing: 10.03.2020
(51) Int. Cl.: B29C 48/32, B29C 49/04

(54) **APPARATUS, PLANT AND METHOD FOR EXTRUDING PLASTIC MATERIAL FOR HOLLOW BODIES**

(30) Priority: 21.03.2019 IT 201900004157
(71) Applicant: S.B. Enterprise S.r.l., 40052 Baricella (Bologna) (IT)
(72) Inventor: CANDI, Alessandro, 40052 Baricella (Bologna) (IT); ENDERBY, George Robin, Broadway (GB)
(74) Representative: Milli, Simone

(57) **Abstract**

Described is an apparatus (1) for extruding plastic material for hollow bodies comprising: a frame (2); an outer extrusion body (3); an inner extrusion body (4) designed to be contained inside the outer body (3) and having a housing cavity (5) forming an annular lip (6); said inner body (4) and outer body (3) forming an annular extrusion cavity (7) designed to be touched by plastic material; a supporting body (8) designed to be housed in the housing cavity (5); first adjusting means (9) and second adjusting means (10) designed to deform said inner body (4) at the lip (6) so as to adjust the relative position between the lip (6) and the outer body (3).

## Description

This invention relates to an apparatus for extruding plastic material for creating hollow bodies, such as, for example, bottles and tanks, wherein a casting of heated plastic material is extruded and then formed by successive shaping operations, preferably by blow moulding.

The invention relates to a plant and a method for extruding plastic material for creating said hollow bodies.

The hollow plastic products which can be made using the processes for extruding plastic material range from the containers with a capacity of 5 ml, such as jars for cosmetic products, to containers with a capacity of 1000 litres, such as the IBC tanks used for transporting large quantities of loose liquid products.

In their most basic embodiment, the apparatuses for extruding plastic material comprise an outer body, generally cylindrical in shape, inside of which an inner body is positioned in such a way as to form, between the inner wall of the outer body and the outer wall of the inner body, an annular extrusion cavity.

Starting from a basic plastic raw material, which is heated, mixed and added with chemical additives, a plastic mixture is created, which is inserted in said annular cavity, from where it comes out in the form of a hot casting, almost cylindrical, made of plastic material.

Said hot casting is then inserted in a blowing mould where the plastic material will adopt its final shape.

The extrusion techniques used are different depending on the size of the product to be made.

For small dimensions, a continuous technique is used, that is to say, a technique wherein the plastic material is extruded as soon as it is heated inside the extrusion apparatus, without it stopping inside of it, before undergoing the shaping operations.

When the size of the hollow body to be produced is greater, on the other hand, the apparatus can no longer work continuously because the first quantities of extruded plastic material would cool down too much before the quantity of material sufficient for the creation of the finished product is extruded.

In these situations, therefore, the extrusion apparatus operates in an accumulating fashion, that is to say, the heated plastic material stays inside the annular cavity in the extrusion apparatus until a quantity of plastic material is accumulated sufficient for forming the hollow body, the quantity being then expelled still completely hot with the aid of a piston.

In order to optimise the forming operations and allow the creation of hollow bodies with original shapes it is often necessary that the casting of plastic material is not homogeneous, both in its longitudinal extension and in its transversal sections.

For example, when a container with a cubic shape is formed it is preferable that the casting of plastic material does not have the same thickness at all the points of a relative transversal cross-section because, with the blowing operations, it passes from a casting with an almost circular cross-section to a container with a square cross-section. If the distribution of material were uniform over the entire almost circular cross-section of the casting, the hollow product with a cubic shape would have a greater thickness on the lateral faces than at the corners between said lateral faces due to the expansion and stretching operations by blowing.

If, on the other hand, it were possible to modify the distribution of the material in the transversal sections of the practically cylindrical casting, it would be possible to obtain a more uniform distribution of plastic material in all the zones of the finished hollow product.

In order to obtain these non-uniformities, there are currently prior art techniques which comprise means for adjusting the inner body, which allow the accumulation or absence of material in the transversal sections of the casting to be created by means of local deformations of the inner body.

In particular, with regard to the means for adjusting the inner body, there are currently systems comprising a plurality of screws designed to apply forces towards the outside of the body in predetermined zones in such a way as to reduce the thickness of the casting locally.

However, since the inner body is made of metal material, generally steel, a deformation towards the outside at a certain point results in a consequent deformation towards the outside at certain points.

These deformations are often difficult to predict and control, so the setting of the adjustments often requires numerous tests and measurements before reaching an optimum solution which leads to the production of a product which meets the desired features.

This process requires, in addition to considerable original work, also a considerable amount of time, since, especially for bodies of considerable dimensions, the production and control of the finished product is performed in a non-instantaneous manner.

In fact, in order to reach the optimum settings, both for the first switching ON of the plant or for the performance of a maintenance operation, several hours and attempts are often necessary, with a reduction in the efficiency of the production process.

In that sense, in the context of the manufacture of hollow bodies by the extrusion of plastic material, a particularly felt need is the possibility of providing a system for adjusting the deformations which is easy and intuitive, so as to reduce the time due to the selection of the parameters for the optimum production of the finished product.

The aim of the invention is to provide an apparatus for extruding plastic material for hollow bodies which allows an optimum adjustment for any desired shape of hollow body to be produced which is particularly fast, simple and intuitive.

Another aim of the invention is to also provide a plant and a method for making hollow bodies of plastic material which allows the production of a finished product with a desired homogeneous shape in all its parts.

Said aims are fully achieved according to the invention as characterised in the appended claims.

These and other features of the invention will become more apparent from the following detailed description of a preferred, non-limiting embodiment of it, with reference to the accompanying drawings, in which:
- Figure 1 is a perspective view of an apparatus for extruding plastic material for making hollow bodies;
- Figure 2 is another perspective view of the extrusion apparatus of Figure 1;
- Figure 3 is a cross-section view of theextrusion apparatus of Figure 1;
- Figure 4 is a perspective view of an inner body, a supporting body and means for adjusting theextrusion apparatus of Figure 1;
- Figure 5 is a perspective view of the inner body of theextrusion apparatus of Figure 1;
- Figure 6 is a perspective view of the supporting body of theextrusion apparatus of Figure 1;
   Figure 7 is an enlarged cross-section view of a detail of the extrusion apparatus of Figure 1;
- Figure 8 is an enlarged perspective view of another detail of theextrusion apparatus of Figure 1;
- Figure 9 is an enlarged front cross-section view of yet another detail of theextrusion apparatus of Figure 1;
- Figure 10 schematically illustrates a plant for making hollow bodies made of plastic material comprising the extrusion apparatus illustrated in the preceding drawings.

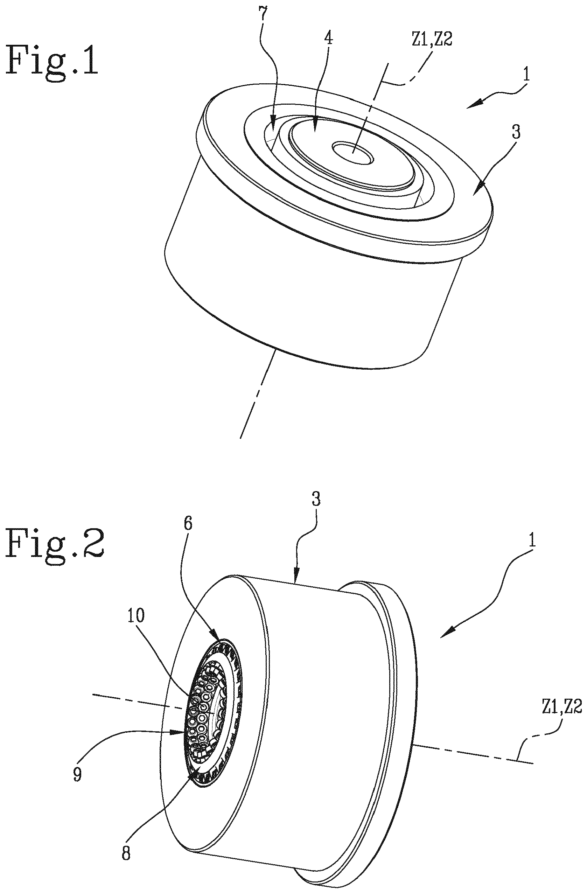

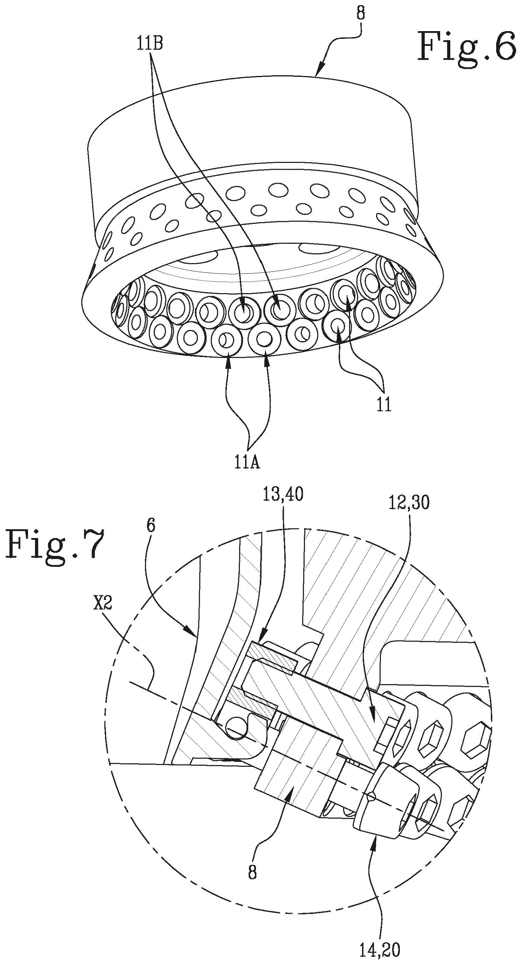

With reference to Figures 1 to 9, the numeral 1 denotes an apparatus for extruding plastic material for making hollow bodies, that is to say, an apparatus designed to produce, by extrusion, a casting of plastic material which is then formed, preferably by blow-moulding, for making the finished hollow product.

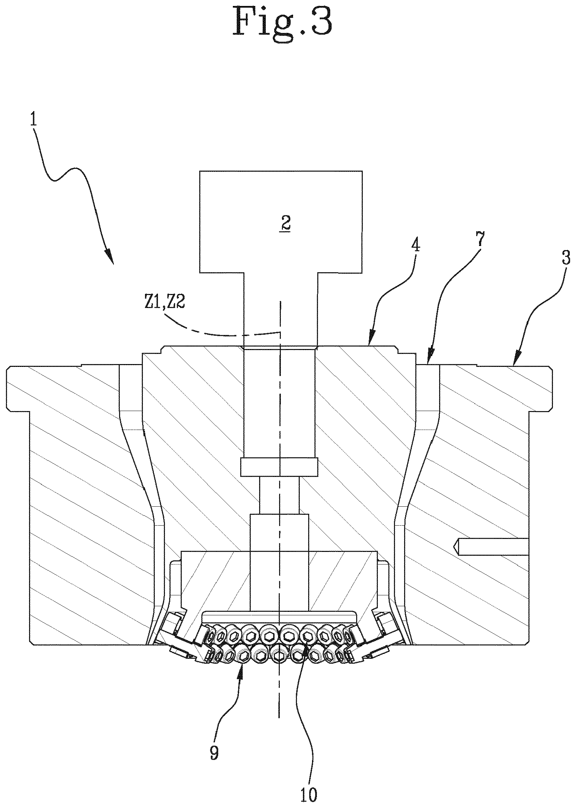

According to one aspect of the invention, the apparatus 1 comprises a frame 2 (illustrated schematically only in Figure 3 for simplicity).

Preferably, the frame 2 is designed to perform the function of supporting the other components (described below) and to guarantee the stability of the apparatus 1.

Said frame 2 might also act as support for other elements which assist the apparatus 1 in the performance of its functions.

According to another aspect, the apparatus 1 comprises an outer extrusion body 3, preferably cylindrical in shape, coupled with the frame 2 and having a longitudinal axis of extension Z1.

Preferably, said longitudinal axis of extension Z1 coincides with an axis of symmetry of the outer body 3.

The outer body 3 further comprises a cavity, preferably with a circular cross-section with a radius that is not constant along the longitudinal axis of extension Z1 and having a longitudinal axis coinciding with the longitudinal axis of extension Z1.

Preferably, said outer body 3 may be operatively connected to one or more actuators (not illustrated) designed to deform, at least in the end portion, the cross-section of the cavity of the outer body 3, so as to modify the characteristics of the plastic casting coming out from the apparatus 1 and to guarantee an optimum production of the finished hollow plastic body.

According to another aspect of the invention, the apparatus 1 comprises an inner extrusion body 4, coupled to the frame 2 and designed to be contained in the cavity of the outer body 3.

Said inner body 4 has a longitudinal axis of extension Z2 which, preferably, coincides with the longitudinal axis of extension Z1 of the outer body 3.

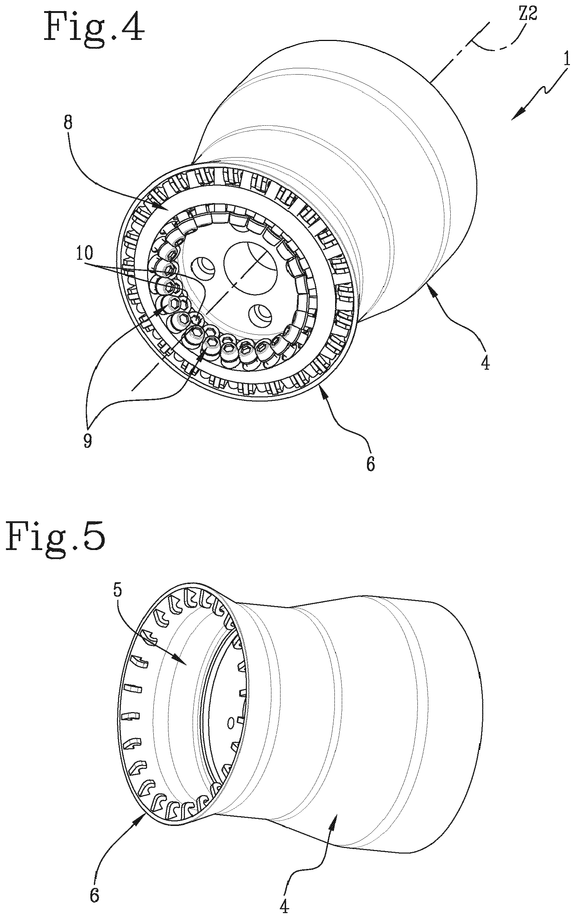

The inner body 4 also has, in its lower end along the direction of its longitudinal axis Z2 of extension, a housing cavity 5 (clearly visible in Figure 5), which defines an annular lip 6.

Preferably, the inner body 4 does not completely fill the cavity of the outer body 3 and an annular extrusion cavity 7 is formed between said inner body 4 and outer body 3 designed to be touched by plastic material in the liquid state.

Preferably, the annular extrusion cavity 7 has along the axis of extension Z2 a cross-section having substantially the shape of a circular crown (the radiuses of which, inside and/or outside, are not constant along the axis of extension Z2).

According to another aspect of the invention, the apparatus 1 comprises a supporting body 8 designed to be housed in the housing cavity 5, so as to have the longitudinal axis of extension coinciding with the longitudinal axis Z2 of extension of the inner body 4.

The supporting body 8 is configured to be fixed to the inner body 4 (so as to remain integral with the inner body 4).

According to an embodiment (illustrated in Figure 3), said outer body 3 can perform vertical movements (relative to the frame 2), that is to say, parallel to the longitudinal direction of extension Z1. It should be noted that in this embodiment the inner body 4 and the supporting body 8 are fixed relative to the frame 2.

According to an alternative embodiment to the previous one (not illustrated), said inner body 4 can perform vertical movements (relative to the frame 2), that is to say, parallel to the longitudinal direction of extension Z2. It should be noted that in this embodiment the outer body 3 is fixed relative to the frame 2.

More generally speaking, it should be noted that one between the outer body 3 and the inner body 4 is movable vertically (relative to the frame 2), whilst the other between the outer body 3 and the inner body 4 is fixed relative to the frame 2.

It should be noted that, in any case, irrespective of the embodiment, both the outer body 3 and the inner body 4 are coupled (movably or fixed) to the frame 2.

According to a preferred embodiment, said supporting body 8 has, at the lip 6, a plurality of holes 11.

The holes 11 are preferably arranged in two circular rings. According to this arrangement, the holes 11 can be divided into first holes 11A and second holes 11B, on the basis of the circular crown to which it belongs.

The two circular rings are, preferably, positioned at two different locations along the longitudinal axis Z2 of extension of the inner body 4.

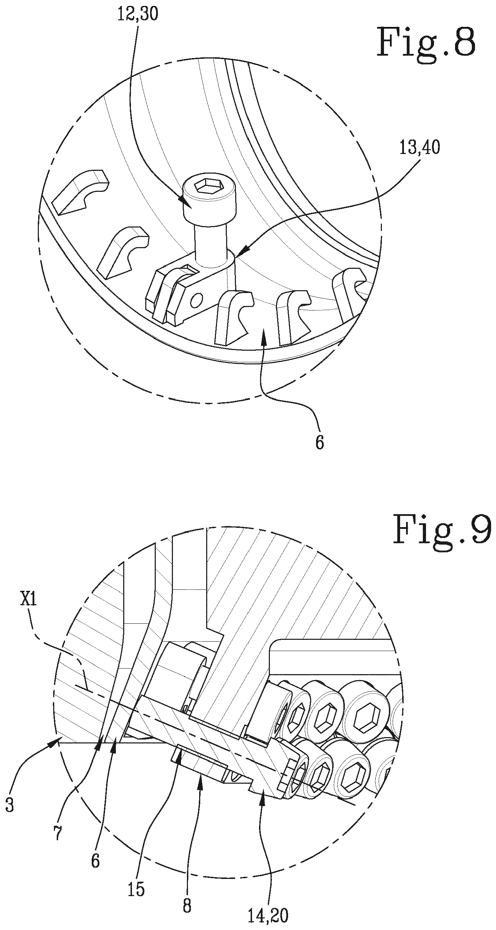

According to another aspect, the apparatus 1 further comprises first adjustment means 9, illustrated in Figure 9 and operatively coupled to the inner body 4 and to the supporting body 8.

The first adjusting means 9 are configured to deform said inner body 4 at the lip 6.

Said first adjusting means 9 are configured for deforming the lip 6 along a direction of moving away X1 not parallel to that of the longitudinal axis of extension Z2 of said inner body 4, in such a way as to adjust the relative position between the lip 6 and the outer body 3 and, consequently, to reduce the thickness of the annular extrusion cavity 7 along said direction of moving away X1 (locally, that is, at the point of action of said first adjusting means 9 affected by the adjustment).

In other words, the first adjusting means 9 are configured for deforming the inner body 4 at predetermined points of the lip 6 applying forces directed outwards, thereby reducing (locally, that is, at the point of action of said first adjusting means 9 affected by the adjustment) the thickness of the annular extrusion cavity 7 and therefore the thickness of the casting of plastic material coming out of the cavity 7.

According to a preferred embodiment, the first adjusting means 9 comprise a rotating part 14 and an engagement part 15 (designed to couple with said rotating part 14), as illustrated in Figure 9.

Preferably, the rotating part 14 comprises a screw 20 designed to abut, at one end of it, the lip 6 and said engagement part 15 comprises a hole 11 of the lip 6 which is threaded so as to engage the screw.

In this way, by screwing/unscrewing said screw 20, the force along the direction of moving away X1 which the screw 20 applies on the lip 6 is increased/reduced so as to adjust the thickness of the annular cavity 7 at predetermined points and therefore the thickness of the casting of plastic material in the liquid state.

According to another aspect of the invention, the apparatus 1 comprises second adjusting means 10, operatively coupled to the inner body 4 and to the supporting body 8, designed to deform said inner body 4 at the lip 6.

The second adjusting means 10 are configured to deform the lip 6 along a direction of moving towards X2 which not parallel to that of the longitudinal axis of extension Z2 of the inner body 4, in such a way as to adjust the relative position between the lip 6 and the outer body 3 and, consequently, increase (locally, that is, close to the point of action of said second adjusting means 10 affected by the adjustment) the thickness of the annular extrusion cavity 7 along said direction of moving towards X2.

In other words, the second adjusting means 10 are configured for deforming the inner body 4 at predetermined points of the lip 6 applying forces towards the inside, thus increasing the thickness of the annular extrusion cavity 7 and therefore the thickness of the casting of plastic material coming out from said cavity 7.

Preferably, said second adjusting means 10 abut at a height, measured vertically along the longitudinal axis of extension Z2 of the inner body 4, greater than the height at which the first adjusting means 9 abut.

According to a preferred embodiment, the second adjusting means 10 comprise a first part 12, passing through one of said holes 11 (that is, the second holes 11B) and freely rotating relative to it, and a second part 13, interposed between the supporting body 8 and the lip 6.

More preferably, said second adjusting means 10 comprise a plurality of first parts 12, each passing through one of said holes 11 (that is, the second holes 11B) and freely rotating relative to it, and a plurality of second parts 13, each interposed between the supporting body 8 and the lip 6.

Said first part 12 and second part 13 are configured in such a way as to engage with each other.

Preferably, said first part 12 comprises a screw 30, passing freely through one of said holes 11 whilst said second part 13 comprises an engagement element 40 equipped with a thread, designed to couple with the thread of said screw 30.

Preferably, said second part 13 is interposed between the supporting body 8 and the lip 6 and is operatively connected both to the supporting body 8, by engaging with the first part 12, and to the lip 6, by means of an engagement system.

It should be noted that, according to the embodiment illustrated, the engagement system comprises a hook - fixing pin system, wherein the lip 6 defines a hook, whilst the second part 13 defines a pin designed to receive said hook in coupling fashion.

Generally speaking, it should be noted that, in said hooking - fixing pin system, the second part 13 comprises one of either the hook or fixing pin, whilst the lip 6 comprises the other of either the hook or the fixing pin.

By actuating the first part 12 (for example, screwing if the first part 12 comprises a screw), the second part 13 is moved close to the supporting body 8; the hook - fixing pin system transmits this action to the lip 6, which is moved towards the supporting body 8. In this way, the lip 6 is also loosened from the outer body 3 and the thickness of the extrusion cavity 7 is increased.

By means of a suitable positioning of the hooking - fixing pin system it is possible to set the direction of moving towards X2 along which the lip 6 is deformed.

In particular, by suitably positioning the hook - fixing pin system, it is possible to ensure that, even though the second adjusting means 10 are at a different height along the axis Z2 relative to the first adjusting means 9, the directions of moving away X1 and the directions of moving away X2 are all located (substantially) on a single plane.

In other words, by suitably positioning the hooking - fixing pin system, it is possible to ensure that the forces for increasing/reducing the thickness of the cavity 7 all act at the same height (vertical), even though at different points of the lip 6.

Preferably, said height (vertical) is the height of the first adjusting means 9, that is to say, the one closest to the distal end of the lip 6, which determines the thickness of the casting of plastic material coming out of the apparatus 1.

Alternatively, it is possible to replace the hook - fixing pin system with other systems of a mechanical type (for example, transmissions with mobile toothed elements, pistons) or of an electronic type (for example, electrical actuators).

Advantageously, the introduction of second adjusting means 10 in the apparatus 1 allows an easier and intuitive adjustment of the local thicknesses of the cavity 7, to adapt in the optimum manner the casting of plastic material coming out from the apparatus 1 to the shape of the finished hollow product to be made.

Still more advantageously, by simultaneously using the first adjusting means 9 and the second adjusting means 10 (independently to each other) it is possible to reduce both the down time of the machine due to the modifications of the deformation parameters and the number of tests necessary for assessing the effectiveness of the finished hollow product, with advantages in terms of efficiency and costs of the production process. In particular, the introduction of the second adjusting means 10, independent of the first adjusting means 9, guarantees the possibility of immediate and direct adjustments on the point of interest.

For example, if only the first adjusting means 9 were present, in order to obtain the same effect as the second adjusting means 10 directly on the point of interest, the first adjusting means 9 must be activated at different points in order to obtain a reaction of the material of the lip 6.

This type of adjustment is extremely laborious and complicated because it is difficult to predict the reactions of the material making up the lip 6 (that is to say, the final effect of the adjustment on the basis of the first adjusting means 9 is difficult to predict); for this reason, the introduction of various adjusting means (independent and acting in opposite directions) allows, advantageously, a more direct and faster adjustment on the points of interest.

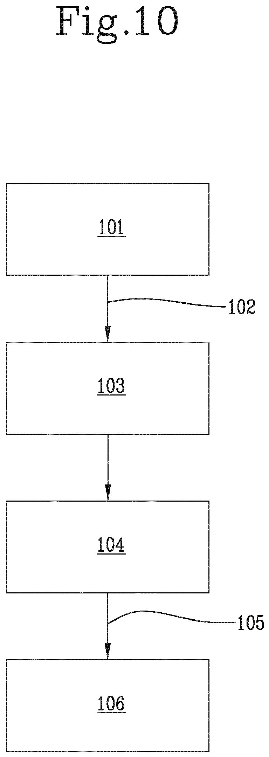

The invention also defines a system 100 for making hollow bodies of made of plastic material, illustrated schematically in Figure 10.

According to an aspect, the plant 100 comprises a tank 101 designed to contain the basic plastic material 102.

Preferably, said basic plastic material 102 is in a solid form, e.g. small discs, balls or granules.

The plant 101 then comprises a heater 103, designed to heat the basic plastic material 102 to bring it to a malleable state, preferably liquid.

Preferably, auxiliary products may be added to the basic plastic product 103 at the heater 102, such as chemical additives (e.g. dyes, plasticisers, lubricants, stabilisers) designed to give the finished product certain physical and/or aesthetic properties.

Downstream of the heater 103, the plant 101 comprises an extrusion station 104, which comprises the extrusion apparatus 1 described above.

Said extrusion station 104 is designed for producing a casting 105 of hot plastic material, which is picked up by the heater and introduced inside, and then extruded from, the cavity 7 of the apparatus 1.

Preferably, the shape of the casting 105 is determined by the shape of the cavity 7 of the apparatus 1 and therefore the casting 105 has, preferably, an almost cylindrical shape.

Depending on the dimensions of the hollow body to be produced, the hot plastic material introduced may escape in the form of casting 105 from the extrusion station 104 in a continuous fashion (if the finished products are jars for cosmetics or bottles for beverages or containers for household products) or in a discontinuous fashion, that is to say, in such a way that the hot plastic material can be stationary inside said extrusion station 104 to be accumulated and then extruded in a greater quantity under the thrust of a piston (in the case of IBC tanks and containers for large quantities of liquid products).

Lastly, the system 101 comprises a forming station 106, wherein the casting 105 is introduced into forming moulds to be shaped into and adopt the desired finished shape.

Preferably, the forming station 106 comprises a blowing apparatus, comprising hollow moulds and a blowing apparatus, configured for generating a jet of air (for example, a blowing device).

The blowing apparatus, using hollow moulds and an air jet, models the casting 105 according to a desired shape.

Advantageously, the use of the plant for making hollow bodies of plastic material according to the invention provides a plant which is easy to adjust for making a hollow body with a desired shape which is homogeneous in all its parts.

The invention also relates to a method for making a hollow body made of plastic material by extrusion in the plant 100.

The method comprises a first step of preparing the basic plastic material 102 inside the tank 101, where said basic plastic material 102 is stationary whilst waiting to undergo processing.

Subsequently, the method comprises a step of transferring the basic plastic material 102 from the tank 101 to the heater 103.

During this step, the basic plastic product 102 is heated to be brought from the solid state to the liquid state and, preferably, auxiliary products are added, such as chemical additives (e.g. dyes, plasticisers, lubricants, stabilisers) designed to give the finished product predetermined physical and/or aesthetic properties.

Subsequently, the method comprises an extrusion step, wherein the mixture of hot plastic material is introduced into the extrusion station 104 (described above) and is expelled in the form of casting 105, preferably almost cylindrical in shape.

Lastly, the method comprises a step of forming said casting 105 (by means of the forming station 106) in order to make the hollow body of the desired shape.

Preferably, the step of forming the casting 105 comprises a step of blowing the casting 105.

The blowing step preferably comprises a step of preparing the hollow moulds designed to contain the casting 105, inside the forming station 106.

Moreover, the blowing step comprises a step of deforming the casting 105, through an air jet, in such a way as to make the plastic material adhere to the walls of the hollow mould.

Moreover, the blowing step comprises a step of cooling the casting 105 through an air jet.

Preferably, said step of deforming and cooling, through an air jet, are performed simultaneously (through the same air jet).

Advantageously, the method for making a hollow body of plastic material by extrusion makes it possible to provide a method which is easy to apply on the plant, also according to the invention, so as to make a finished hollow product which is homogeneous in all its parts.

## Claims

1. An apparatus (1) for extruding plastic material for hollow bodies comprising:
- a frame (2);
- a hollow outer extrusion body (3), coupled to the frame (2), having a longitudinal axis of extension (Z1);
- an inner extrusion body (4), coupled to the frame (2) and designed to be contained inside the outer body (3), having an axis (Z2) of longitudinal extension coinciding with the longitudinal axis of extension (Z1) of the outer body (3); said inner body (4) also having, in its lower end along the direction of its longitudinal axis of extension (Z2), a housing cavity (5) forming a lip (6) with an annular shape; said inner body (4) and outer body (3) forming an annular extrusion cavity (7) designed to make contact with plastic material;
- a supporting body (8) designed to be housed in the housing cavity (5) and to be fixed to the inner body (4);
- first adjusting means (9), operatively coupled to the inner body (4) and to the supporting body (8), designed to define said inner body (4) at the lip (6), along a direction of moving away (X1) not parallel to that of the longitudinal axis of extension (Z2) of said inner body (4), in such a way as to adjust the relative position between the lip (6) and the outer body (3) and, consequently, to reduce the thickness of the annular extrusion cavity (7) along said direction of moving away (X1);
said extrusion apparatus (1) being **characterised in that** it comprises second adjusting means (10), operatively coupled to the inner body (4) and to the supporting body (8), designed to define said inner body (4) at the lip (6), along a direction of moving towards (X2) not parallel to that of the longitudinal axis of extension (Z2) of said inner body (4), in such a way as to adjust the relative position between the lip (6) and the outer body (3) and, consequently, to increase the thickness of the annular extrusion cavity (7) along said direction of moving towards (X2).

2. The extrusion apparatus (1) according to the preceding claim, wherein the first adjusting means (9) and the second adjusting means (10) are operatively coupled to the inner body (4) and to the supporting body (8) in such a way that the direction of moving away (X1) and the direction of moving towards (X2) are coplanar.

3. The extrusion apparatus (1) according to any one of the preceding claims, wherein the supporting body (8) has a plurality of holes (11).

4. The extrusion apparatus (1) according to the preceding claim, wherein the second adjusting means (10) comprise a first part (12), and a second part (13), interposed between the supporting body (8) and the lip (6); said first part (12) and second part (13) being configured for engaging with each other.

5. The extrusion apparatus (1) according to the preceding claim, wherein the first part (12) passes through one of said holes (11).

6. The extrusion apparatus (1) according to the preceding claim, wherein the first part (12) can rotate freely relative to one of said holes (11).

7. The extrusion apparatus (1) according to claims 4 to 6, wherein the first part (12) comprises a screw (30) and the second part (13) comprises an engagement element (40) provided with a thread, designed to couple with said screw (30).

8. The extrusion apparatus (1) according to claim 4 or 7, wherein the inner body (4) comprises one of either a hook or a fixing pin and the second part (13) comprises the other of either said hook or a fixing pin, said hook and fixing pin being configured for engaging.

9. The extrusion apparatus (1) according to any one of claims 3 to 8, wherein the first adjusting means (9) comprise a rotating part (14), passing through one of said holes (11), and an engaging part (15).

10. The extrusion apparatus (1) according to the preceding claim, wherein the rotating part (14) comprises a screw (20) designed to make contact, with one end, with the lip (6) and the engagement part (15) comprises the hole (11) equipped with a thread for engaging said screw (20).

11. A system (100) for making hollow bodies of plastic material comprising:
- a tank (101) designed to contain the basic plastic material (102);
- a heater (103), designed to heat the basic plastic material (102) to change it to the liquid state;
- an extrusion station (104), comprising the extrusion apparatus (1) according to any one of the preceding claims, designed to extrude a casting (105) of plastic material;
- a forming station (106) designed to deform and cool the casting (105) in such a way as to form a hollow body having a predetermined shape.

12. A plant (100) according to the preceding claim, wherein the forming station (106) comprises a blow-moulding apparatus.

13. A method for making a hollow body of plastic material by extrusion in a plant (100) for making hollow bodies of plastic material according to claim 11 or 12 comprising the following steps:
- preparing a basic plastic material (102) in the tank (101);
- transferring said plastic material (102) from the tank (101) to the heater (103);
- heating said plastic material (102) inside the heater (103) to change it from the solid state to the liquid state;
- extrusion, by means of the extrusion station (104), of the plastic material (102) in the form of casting (105);
- forming said casting (105) in a forming station (106) for making the hollow body having a predetermined shape.

14. The method for making a hollow body of plastic material according to the preceding claim, wherein the step of forming said casting (105) inside a forming station (106) for making the hollow body having a predetermined shape comprises a step of blowing, by means of a jet of air.
